# EUROPÄISCHE PATENTSCHRIFT

(11) **EP 1 211 346 B1**
(45) Veröffentlichungstag und Bekanntmachung des Hinweises auf die Patenterteilung: **14.07.2004**
(21) Anmeldenummer: 01126600.4
(22) Anmeldetag: 19.11.2001
(51) Int. Cl.: D06M 10/10, D06M 15/564

(54) **Filzfrei ausgerüstete Wolle und Verfahren zur Filzfreiausrüstung**
Non-felting wool and process for giving an anti-felting finish
Laine résistante au feutrage et procédé d'ennoblissement antifeutrant

(30) Priorität: 01.12.2000 DE 10060048
(43) Veröffentlichungstag der Anmeldung: 05.06.2002
(73) Patentinhaber: Bayer Chemicals AG, 51368 Leverkusen (DE)
(72) Erfinder: Jansen, Bernhard, Dr., 51061 Köln (DE); Kümmeler, Ferdi, 51371 Leverkusen (DE); Heinen, Ralf, 50737 Köln (DE)

(56) Entgegenhaltungen:
- EP-A- 0 272 941
- EP-A- 0 342 439
- EP-A- 1 010 799
- DE-A- 19 736 542
- KAN C W ET AL: "EFFECT OF LOW TEMPERATURE PLASMA, CHLORINATION, AND POLYMER TREATMENTS AND THEIR COMBINATIONS ON THE PROPERTIES OF WOOL FIBERS" TEXTILE RESEARCH JOURNAL, TEXTILE RESEARCH INSTITUTE. PRINCETON, N.J, US, Bd. 68, Nr. 11, 1. November 1998 (1998-11-01), Seiten 814-820, XP000782407 ISSN: 0040-5175

## Beschreibung

Die Erfindung betrifft filzfrei ausgerüstete Wolle und ein Verfahren zur Filzfreiausrüstung durch Behandlung der Wolle mit einem Plasma sowie eine Nachbehandlung mit einem speziellen Ausrüstungsmittel.

In der textilverarbeitenden Industrie besteht ein besonderes Interesse an einer Verringerung der Verfilzungsneigung von Wolle, insbesondere von Rohwolle bzw. unverarbeiteter Wolle. Üblicherweise wird die Verfilzung der Wolle durch Ausrüstung mit speziellen Hilfsmitteln herabgesetzt.

Isocyanate und vor allem selbstdispergierende Isocyanate werden seit langem als Hilfsmittel zur Filzfreiausrüstung von Textilien verwendet. Die inzwischen bevorzugt zum Einsatz gelangenden selbstdispergierenden Isocyanate führen jedoch bei ihrer alleinigen Anwendung immer noch nicht zu einer völlig zufriedenstellenden Antifilzausrüstung der behandelten Textilien.

Bekannt ist aus DE-A-198 587 34 und DE-A-198 587 36 ferner die Filzfreiausrüstung von Wolle durch Kombination einer Plasmabehandlung mit einer Nachbehandlung unter Einsatz derartiger selbstdispergierende Isocyanate. Um diese selbstdispergierenden Isocyanate auf die Wolle zu applizieren, müssen zunächst wässrige Dispersionen hergestellt werden. Da derartige Dispersionen aufgrund der in Wasser einsetzenden Vernetzungsreaktionen der Isocyanat-Endgruppen nur sehr begrenzt lagerfähig sind, können sie nur relativ kurz vor dem Einsatz zur Wollbehandlung hergestellt werden.

In der DE-A-2 035 172 wird ein Verfahren zur Antifilzausrüstung von Wolle beschrieben, bei dem man die Wolle mit einer Polyurethanlatexflotte behandelt, das Gewebe trocknet und anschließend härtet. Um für die Ausrüstung geeignete Latices herstellen zu können, müssen bei der Vorpolymerisation organische Lösungsmittel sowie externe Emulgatoren eingesetzt werden. Die zunächst erhaltenen Präpolymere werden anschließend durch Zugabe eines Kettenverlängerungsmittels auspolymerisiert.

Die DE-OS 26 57 513 legt ein Verfahren zum Filzfestmachen von Wolle dar, in dem Umsetzungsprodukte aus Polyisocyanaten mit hydroxyfunktionellen Verbindungen eingesetzt werden.

DD 5381 beschreibt ein Verfahren zur Herstellung von hydrophilen basischen Polyurethanen aus Diisocyanaten, diprimären aliphatischen Glykolen, die in offener Kette ein oder mehrere basische tertiäre Stickstoffatome enthalten, und diprimären Glykolen ohne basischen Stickstoff. Für derartige Produkte werden als Anwendungsmöglichkeiten ganz allgemein Folien, Faserstoffe, Schlichte- und Appreturmittel, Animalisierungsmittel und Leimungsmittel für Papier genannt.

DD 5379 beschreibt ein Verfahren zur Herstellung hydrophiler basischer Polyurethane aus Diisocyanaten und stickstoffhaltigen Glykolen, wobei die Glykole in der Kette zwischen den Hydroxylgruppen ein oder mehrere tertiäre Stickstoffatome enthalten, deren dritte Valenzen durch einwertige Alkylgruppen abgesättigt sind, die nicht mehr Kohlenstoffatome aufweisen als die kürzeste Kohlenstoffkette zwischen Hydroxylgruppe und tertiärem Stickstoff. Auch für diese Produkte werden als Anwendungsmöglichkeiten ganz allgemein Folien, Faserstoffe, Schlichte- und Appreturmittel, Animalisierungsmittel und Leimungsmittel für Papier genannt.

DD 5367 beschreibt ganz spezielle Polyurethane, die aus Diisocyanaten und N,N'-Di-[oxyalkyl]-piperazine hergestellt werden.

Die Aufgabe der vorliegenden Erfindung bestand darin, ein verbessertes Verfahren zur Filzfreiausrüstung von Wolle zur Verfügung zu stellen.

Gegenstand der vorliegenden Erfindung ist ein Verfahren zur Filzfreiausrüstung von Wolle, welches dadurch gekennzeichnet ist, dass die Wolle
a) in einer Vorbehandlung einem Plasma ausgesetzt und
b) mit einer wässrigen Dispersion kationischer Polyurethane behandelt wird.

Die Plasmabehandlung der Wolle gemäß Schritt a) des erfindungsgemäßen Verfahrens kann entweder in Form einer Niedertemperatur-Plasmabehandlung bei verringertem Druck oder in Form einer Coronabehandlung bei Normaldruck erfolgen.

Die Niedertemperatur-Plasmabehandlung ist ausführlich in der DE 196 16 776 C1 beschrieben, auf die hiermit ausdrücklich Bezug genommen wird. Die Wolle wird bei einem Druck von 10⁻² - 10 mbar über einen Zeitraum von 1 - 600 Sekunden einer Hochfrequenzentladung mit einer Frequenz von 1 kHz - 3 GHz und einer Leistungsdichte von 0.001 - 3 W/cm³ unterworfen, gegebenenfalls unter Zusatz von nicht polymerisierenden Gasen.

Die Durchführung erfolgt bevorzugt unter einem Druck von 0,1 - 1 mbar und über einen Zeitraum von 2 - 5 Minuten.

Das eigentliche Niedertemperatur-Plasma wird durch Einspeisung von elektromagnetischer Strahlung im Frequenzbereich von 1 kHz - 3 GHz erzeugt. In einer bevorzugten Variante wird das Niedertemperatur-Plasma über eine Mikrowollenentladung von 1 - 3 GHz erzeugt (Die Leistungsdichte an der Auskopplung beträgt insbesondere 0.1 - 15 W/cm²). Die elektromagnetische Strahlung kann hierbei kontinuierlich oder gepulst zugeführt werden. Bewährt hat sich insbesondere eine gepulste Hochfrequenzentladung mit einer Pulsfrequenz bis zu 10 kHz.

Im Fall der zusätzlichen Verwendung von nicht polymerisierenden Gasen als Plasmaprozeßgase werden diese mit einer Durchflussrate von bis zu 200 l/h in den Plasmabehandlungsraum eingelassen. Als nicht polymerisierende Gase sind insbesondere Sauerstoff, Stickstoff, Edelgase, insbesondere Argon, Luft oder Mischungen dieser Gase geeignet.

Konstruktion und apparative Anordnungen eines Niedertemperatur-Plasma-Reaktors sind an sich bekannt. Vorzugsweise verwendet man einen elektrodenlos ausgeführten Reaktor mit einer Auskopplung für Mikrowellen. Die zu behandelnde Wolle wird bevorzugt unterhalb der Auskopplungseinheit plaziert. Der Abstand der Wolle zur Auskopplungseinheit beträgt bevorzugt 1 - 30 cm, insbesondere 2 - 10 cm. Nachdem man die zu behandelnde Wolle in den Reaktor eingebracht hat, wird dieser in geeigneter Weise mit Vakuumpumpen so evakuiert, dass der Druck während der Plasmabehandlung im Bereich von 10⁻² - 10 mbar, vorzugsweise von 0.1 - 1 mbar liegt. Bei kontinuierlichem Durchlaufbetrieb werden bevorzugt spezielle Vakuumschleusen angelegt, die eine strömungsfreie Ein- und Ausführung des Materials ermöglichen.

Alternativ zu dieser Ausführungsform der Niedertemperatur-Plasmabehandlung unter niedrigem Druck kann die Wolle auch einer Coronabehandlung bei einem Druck im Bereich von 100 mbar - 1.5 bar, bevorzugt bei Normaldruck, unterzogen werden. Die Coronabehandlung ist ausführlich in der DE-A-198 587 36 beschrieben, auf die hiermit ausdrücklich Bezug genommen wird.

Bei der Coronabehandlung wird die Wolle über einen Zeitraum von 1 - 60 Sekunden, bevorzugt 2-40 Sekunden und insbesondere 3-30 Sekunden, einer Hochfrequenzentladung mit einer Leistungsdichte von üblicherweise 0.01 - 5 W/cm² unterworfen, gegebenenfalls unter Zusatz von nicht polymerisierenden Gasen. Geeignete nicht polymerisierende Gase sind Luft, Sauerstoff, Stickstoff, Edelgase oder Gemische davon.

Das eigentliche Plasma wird durch Anlegen einer Wechselspannung von 1-20 kV im Frequenzbereich zwischen 1 kHz - 1 GHz, bevorzugt 1-100 kHz an Elektroden erzeugt, wobei ein oder beide Pole mit einem Isolatormaterial versehen sind. Die Wechselspannung kann dabei entweder kontinuierlich oder mit Einzelpulsen bzw. mit Pulszügen und dazwischenliegenden Pausen zugeführt werden.

Konstruktion und apparative Anordnungen eines Corona-Reaktors sind an sich bekannt und beispielsweise in der DE-A-197 31 562 beschrieben. Bevorzugt wird die Corona-Behandlung über elektrische Entladungen im Normaldruckbereich durchgeführt, indem die zu behandelnde Wolle zunächst in ein geschlossenes, dichtes Behandlungsgehäuse eingeführt, dort mit dem Arbeitsgas, d.h. dem oben erwähnten nicht polymerisierenden Gas, beladen und anschließend in einem Spalt zwischen mindestens zwei Behandlungselektroden einer elektrischen Barriereentladung ausgesetzt wird. Der Abstand des Wollmaterials zu den Behandlungselektroden beträgt 0 - 15 mm, bevorzugt 0.1 - 5 mm und insbesondere 0.3 - 2 mm. Die Behandlungselektroden sind bevorzugt als drehbare Walzen ausgebildet, von denen eine oder beide mit elektrisch festem dielektrischem Material beschichtet sind.

Die Durchführung der Coronabehandlung bei einem Druck im Bereich von ca. 100 mbar bis ca. 1.5 bar, bevorzugt bei Normaldruck, hat im Vergleich zur Niederdruck-Plasmabehandlung bei ca. 10⁻² - ca. 10 mbar den Vorteil, dass die apparative Anordnung sehr viel weniger aufwendig ist als bei der Niederdruck-Behandlung. Es sind keine Vakuumpumpen erforderlich, und es entfällt auch die Anbringung spezieller Vakuumschleusen.

Die besondere Wirkung der Plasmabehandlung in Schritt a) des erfindungsgemäßen Verfahrens könnte ohne Anspruch auf Richtigkeit wie folgt erklärt werden. Die in der Faser vorhandene Flüssigkeit desorbiert während des Verfahrens als Wasserdampf/gas von der Faseroberfläche. Es kommt zur Ausbildung von energiereichen Elektronen, Ionen sowie hochangeregten neutralen Molekülen bzw. Radikalen, die auf die Oberfläche der Faser einwirken, wobei der von der Faser desorbierte Wasserdampf bewirkt, dass in unmittelbarer Nähe der jeweiligen Faseroberfläche besonders reaktive Teilchen gebildet werden, die auf die Oberfläche einwirken.

Im Anschluss an die Plasmabehandlung in Schritt a) des erfindungsgemäßen Verfahrens wird die Wolle in Schritt b) mit einer wässrigen Lösung kationischer Polyurethane behandelt.

Diese kationischen Polyurethane besitzen ein Molekulargewicht (Gewichtsmittel) von mindestens 14000, bevorzugt mindestens 16000, besonders bevorzugt mindestens 18000 und insbesondere mindestens 20.000. Die Obergrenze des Molekulargewichtes liegt üblicherweise bei 200.000, vorzugsweise bei 180.000 und besonders bevorzugt bei 150.000.

Die kationischen Polyurethane sind erhältlich durch Umsetzung von
(i) organischen Polyisocyanaten der allgemeinen Formel (I)

   Q[NCO]ₚ, (I)

   worin
   - p: eine Zahl von 1,5 bis 5 darstellt und
   - Q: ein organischer Rest ist
   und
(ii) ein oder mehreren Bis- und/oder Polyhydroxylverbindungen, die mindestens ein tertiäres Stickstoffatom und mindestens zwei Hydroxylgruppen enthalten,
   wobei der kationische Charakter durch anschließende Protonierung oder Alkylierung der tertiären Stickstoffatome erhältlich ist.
   Gegebenenfalls werden zur Herstellung der erfindungsgemäß eingesetzten kationischen Polyurethane auch noch
(iii) ein oder mehrere Bis- und /oder Polyhydroxylverbindungen, welche keine Stickstoffatome enthalten und Molekulargewichte von 62 bis 5000 besitzen,
eingesetzt.

Als organische Polyisocyanate (i) der allgemeinen Formel (I)

Q[NCO]ₚ, (I)

wobei Q und p die oben genannten Bedeutungen haben, kommen beispielsweise die drei folgenden Typen in Frage:
1) Aliphatische, cycloaliphatische, araliphatische und aromatische Polyisocyanate
2) Aliphatische, cycloaliphatische, araliphatische und aromatische Polyisocyanate, die Isocyanaurat- und/oder Uretdion- und/oder Allophanat- und/oder Biuret- und/oder Oxadiazinstrukturen enthalten
3) Isocyanatpräpolymere, die erhältlich sind durch Umsetzung von aliphatischen, cycloaliphatischen, araliphatischen und aromatischen Diisocyanaten und Polyestem und/oder Polyethem.

Die aliphatischen, cycloaliphatischen, araliphatischen und aromatischen Polyisocyanate 2) mit Isocyanaurat- und/oder Uretdion- und/oder Allophanat- und/oder Biuret- und/oder Oxadiazinstrukturen können nach an sich bekannten Verfahren des Standes der Technik aus entsprechenden aliphatischen, cycloaliphatischen, araliphatischen und aromatischen Diisocyanaten hergestellt werden.

Unter den Isocyanatpräpolymeren 3) sind Umsetzungsprodukte von aliphatischen, cycloaliphatischen, araliphatischen und aromatischen Diisocyanaten und Polyestern und/oder Polyethern zu verstehen, die gegebenenfalls nicht umgesetzte, freie Polyisocyanate enthalten können.

Als aliphatische, cycloaliphatische, araliphatische und aromatische Diisocyanate, die als Typ 1) oder zur Herstellung der Typen 2) und 3) eingesetzt werden können, seien beispielhaft genannt:

1,4 Diisocyanatobutan, 1,6- Diisocyanatohexan, 1,5- Diisocyanato-2,2-dimethylpentan, 2,2,4- Trimethyl-1,6, -diisocyanatohexan, 1,3- und 1,4- Diisocyanatocyclohexan, 1-Isocyanato-1-methyl-4-isocyanatomethylcyclohexan und 4,4'-Diisocyanato-cyclohexylmethan, 2,4- und 2,6- Diisocyanato-1-methylbenzol, 4,4'-Diisocyanato-diphenylmethan sowie beliebige Gemische dieser Diisocyanate.

Als bevorzugte Beispiele für modifizierte Isocyanate 2) seien genannt: Trimerisierungsprodukte des Hexamethylendiisocyanates sowie dessen Derivate auf Biuretbasis, Gemische aus dem Uretdion und den Trimerisierungsprodukten des Hexamethylendiisocyanates und das Uretdion aus Toluylendiisocyanat.

Als bevorzugte Beispiele für die Isocyanatpräpolymere 3) seien genannt: Umsetzungsprodukte des Toluylendiisocyanates oder Hexamethylendiisocyanates mit mehrwertigen Alkoholen, so beispielsweise des Toluylendiisocyanates mit Trimethylolpropan.

Bevorzugt werden organische Polyisocyanate der allgemeinen Formel (I)

Q[NCO]ₚ, (I)

worin
- p: eine Zahl von 1,5 bis 5 darstellt und
- Q: einen aliphatischen Kohlenwasserstoffrest mit 2 bis 18, insbesondere 6 bis 10 Kohlenstoffatomen, einen cycloaliphatischen Kohlenwasserstoffrest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen sowie einen araliphatischen Kohlenwasserstoffrest mit 8 bis 15, vorzugsweise 8 bis 13 Kohlenstoffatomen darstellt.

Als Bis- und/oder Polyhydroxylverbindungen (ii) sind solche der allgemeinen Formel (II) bevorzugt

HO-(CHR¹)ₘ-NR²-(CHR¹)ₙ-OH (II),

worin
- n und m: unabhängig voneinander eine Zahl von 1 bis 6 darstellen,
- R¹: unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
- R²: geradkettiges oder verzweigtes C₁-C₁₀-Alkyl, bevorzugt C₁-C₆-Alkyl, C₁-C₁₀-Cycloalkyl, bevorzugt C₅-C₆-Cycloalkyl, C₆-C₁₂-Aryl, bevorzugt Phenyl, oder einen Rest -(CH₂)ᵣ-OH, wobei r eine Zahl von 1 bis 6 darstellt.

Als Bis- und/oder Polyhydroxylverbindungen (ii) der allgemeinen Formel (II) seien beispielhaft genannt:
N-Methyldiethanolamin, N-Ethyldiethanolamin, N-Butyldiethanolamin, N-Methyl-dipentanolamin-1,5, N-Ethyldipentanolamin-1,5, Triethanolamin, Umsetzungs-produkte von Fettaminen mit zwei Mol Ethylenoxid oder Propylenoxid, es sind auch Alkoxylierungsprodukte der oben genannten Verbindungen wie beispielsweise Tris-[2-(2-hydroxyethoxy)-ethyl]-amin möglich.

Als Bis- und /oder Polyhydroxylverbindungen (iii), die keine Stickstoffatome enthalten und Molekulargewichte von 62 bis 5000 besitzen, seien beispielhaft genannt: Ethylenglykol, Propandiol-1,2, Propandiol-1,3, Butandiol-1,4, Butandiol-1,3, Butandiol-2,3, Butandiol-1,2, Butendiol-1,4, Butindiol-1,4, Pentandiol-1,5, Neopentylglykol, Hexandiol-2,5, Hexandiol-1,6, 3-Methylpentandiol-1,5, 2,5- Dimethylhexan-2,5-diol, Octadecandiol-1,12, Diethylenglygol, Dipropylenglykol, Triethylenglykol, Tripropylenglykol, Tetraethylenglykol, Tetrapropylenglykol sowie weitere höhere Polyethylen- und Polypropylenglykole, Glycerin, Trimethylolpropan, 2-Hydroxymethyl -2-methyl-1,3-propandiol, 1,2,6- Hexantriol und Pentaerythrit.

Des weiteren sind Polyether und Polyester mit gewichtsmittleren Molekulargewicht von bis zu 5000, bevorzugt bis zu 3000, besonders bevorzugt bis 2000 als Komponente (iii) verwendbar. Polyether sind erhältlich aus den oben als Bis- und/oder Polyhydroxylverbindungen genannten Verbindungen als Startermolekülen durch Reaktion mit Ethylen-, Propylen- und/ oder Butylenoxid nach bekannten Verfahren des Standes der Technik. Polyester sind ebenfalls aus den oben genannten Bis- und/oder Polyhydroxylverbindungen erhältlich und zwar durch Veresterung mit technisch zugänglichen Di- oder Tricarbonsäuren nach bekannten Verfahren des Standes der Technik.

Bewährt haben sich vor allem kationische Polyurethane, die erhalten werden durch Umsetzung von
(i) organischen Polyisocyanaten der allgemeinen Formel (I)

   Q[NCO]ₚ, (I)

   worin
   - p: eine Zahl von 1,5 bis 5, insbesondere 2, darstellt und
   - Q: einen aliphatischen Kohlenwasserstoffrest mit 2 bis 18, insbesondere 6 bis 10 Kohlenstoffatomen, einen cycloaliphatischen Kohlenwasserstoffrest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen sowie einen araliphatischen Kohlenwasserstoffrest mit 8 bis 15, vorzugsweise 8 bis 13 Kohlenstoffatomen darstellt
   und
(ii) Bis- und/oder Polyhydroxylverbindungen (ii) der allgemeinen Formel (II)

   HO-(CHR¹)ₘ-NR²-(CHR¹)ₙ-OH (II),

   worin
   - n und m: unabhängig voneinander eine Zahl von 1 bis 6 darstellen und insbesondere gleich sind und eine Zahl von 1 bis 3 darstellen,
   - R¹: unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
   - R²: geradkettiges oder verzweigtes C₁-C₁₀-Alkyl, insbesondere C₁-C₆-Alkyl, C₁-C₁₀-Cycloalkyl, insbesondere C₅-C₆-Cycloalkyl, C₆-C₁₂-Aryl, insbesondere Phenyl, oder einen Rest -(CH₂)ᵣ-OH, wobei r eine Zahl von 1 bis 6, insbesondere 1 bis 3 darstellt
und wobei der kationische Charakter der Polyurethane durch anschließende Protonierung oder Alkylierung der tertiären Stickstoffatome erzeugt wird.

Ganz besonders bevorzugt werden in Schritt b) des erfindungsgemäßen Verfahrens solche kationischen Polyurethane eingesetzt, die durch Umsetzung von
(i) 2,4-Toluylendiisocyanat oder 2,6-Toluylendiisocyanat oder Gemischen dieser Isomeren mit
(ii) N-Methyl- oder n-Butyldiethanolamin
erhalten werden, wobei der kationische Charakter durch Behandlung dieser Umsetzungsprodukte mit einer der Säuren Salzsäure, Schwefelsäure, Ameisensäure, Essigsäure oder Propionsäure erzeugt wird.

Zur Herstellung der in Schritt b) des erfindungsgemäßen Verfahrens einzusetzenden kationischen Polyurethane werden die Bis- und/oder Polyhydroxylverbindungen (ii) und gegebenenfalls (iii) üblicherweise in einem aprotischen Hilfslösungsmittel vorgelegt.

Dabei hat es sich bewährt, die Menge an Polyhydroxylverbindungen (ii) und gegebenenfalls (iii) so zu wählen, dass noch ein gut verarbeitbares kationisches Polymeres resultiert.

Als aprotische Lösungsmittel für die Reaktion seien beispielhaft genannt: Alkyletheracetate, Glykoldiester, Toluol, Carbonsäureester, Aceton, Methylethylketon, Tetrahydrofuran, Dimethylformamid und N-Methylpyrrolidon.

Zu dieser vorgelegten Lösung wird dann unter Rühren das organische Polyisocyanat (i) zugesetzt. Dabei gilt es, Überschüsse an organischem Polyisocyanat zu vermeiden, da dies aufgrund der Anwesenheit einer Vielzahl von tert. Aminstrukturen aus den Komponenten (ii) und gegebenenfalls (iii) zu unerwünschten Nebenreaktionen führt.

Durch die Mitverwendung an sich bekannter Katalysatoren wie Dibutylzinndilaurat, Zinn-(II)-octoat oder 1,4-Diazabicyclo[2,2,2]octan und/oder weiterer tertiären Stickstoff oder Zinn enthaltenden Verbindungen und gegebenenfalls auch Bismutverbindungen oder anderer in der Polyurethanchemie üblicher Katalysatoren in Mengen von 10 bis 1000 ppm, bezogen auf die Reaktionskomponenten, kann die Reaktion beschleunigt werden. Die Reaktion wird im Temperaturbereich bis 130°C, vorzugsweise im Bereich von 20 bis 80°C durchgeführt. Die Reaktionstemperatur ist nach oben durch den Siedepunkt des Lösungsmittels begrenzt; es kann zweckmäßig sein, die Reaktion unter Siedekühlung durchzuführen. Die Reaktion wird durch Titration des NCO-Gehaltes oder gegen Ende der Reaktion durch Messung der IR-Spektren und Auswertung der NCO-Bande bei 2260-2275 cm⁻¹ verfolgt und ist beendet, wenn der Isocyanatgehalt nicht mehr als 0,1 Gew.-% oberhalb des Wertes liegt, der bei vorgegebener Stöchimetrie bei vollständigen Umsatz erreicht wird, bzw. wenn keine NCO-Bande mehr zu sehen ist.

Es hat sich bewährt, das molares Verhältnis der Komponente (i) zur Komponente (ii) plus gegebenenfalls der Komponente (iii) so einzustellen, dass ein ungefähr stöchiometrisches Verhältnis der NCO- und OH-Endgruppen vorliegt.

Der kationische Charakter wird den Polyurethanen üblicherweise auf einem der beiden folgenden Wege verliehen.

Zum einen ist es möglich, die hergestellte Lösung des Polyurethans nach der Abreaktion mit einer wässrigen Säure zu verdünnen. Als Säuren können beispielsweise Salzsäure, Schwefelsäure, Ameisensäure, Essigsäure oder Propionsäure eingesetzt werden. Bevorzugt sind Ameisensäure und Essigsäure. Durch diese Säurezugabe werden die tertiären Stickstoffatome aus der Komponente (ii) und, sofern verwendet, (iii) protoniert. Hierbei wird üblicherweise mit einer stöchiometrischen Menge an Säure, bezogen auf die Stickstoffatome gearbeitet, so dass eine möglichst vollständige Protonierung erzielt wird. Anschließend wird das Lösungsmittel abdestilliert, bis der theoretische Feststoffgehalt erreicht ist.

Zum anderen ist es auch möglich, das wie oben beschrieben hergestellte Polyurethan durch teilweise oder vollständige Alkylierung in ein Polyurethan mit permanenten kationischen Ladungen zu überführen. Dies kann nach an sich bekannten Verfahren unmittelbar im Anschluss an die Herstellung geschehen entweder in organischer Lösung oder auch im wässrigen Zustand. Als Alkylierungsmittel werden bevorzugt Methylchlorid, Methyljodid, Dimethylsulfat oder p-Toluolsulfonsäuremethylester eingesetzt.

In Schritt b) des erfindungsgemäßen Verfahrens wird das in wässriger Dispersion vorliegende kationische Polyurethan bei einem pH -Wert von 2 bis 7 , bevorzugt 3 bis 6, besonders bevorzugt 4 bis 6 und insbesondere 4,5 bis 5,5 auf die Wolle appliziert. Die Anwendungstemperatur liegt üblicherweise im Bereich von 20 bis 80°C, bevorzugt von 30 bis 70, besonders bevorzugt von 30 bis 60°C.

Die Konzentration an wässrigem kationischem Polyurethan, bezogen auf den Feststoffgehalt an Polyurethan, in der Ausrüstungsflotte beträgt 0,5 bis 75 g/l, bevorzugt 1 bis 50 g/l.

Die Behandlung der gemäß Schritt a) vorbehandelten Wolle mit der wässrigen Lösung kationischer Polyurethane erfolgt nach an sich bekannten Ausrüstungsverfahren des Standes der Technik. Geeignet ist beispielsweise eine diskontinuierliche Arbeitsweise im Ausziehverfahren oder eine kontinuierliche Arbeitsweise durch Tauchen, Walzenauftrag, Foulardieren, Aufsprühen, Aufspritzen oder Lisseusenapplikation gegebenenfalls unter Verwendung von Färbeapparaten, Rührwerken etc. zur Bewegung der Behandlungsflotte. Das Flottenverhältnis ist in weiten Grenzen wählbar und kann im Bereich von 1: (5-20), bevorzugt von 1: (5-10) liegen.

Unerwarteterweise ziehen die kationischen Polyurethane in Schritt b) des erfindungsgemäßen Verfahrens sehr schnell auf die Wolle auf. Dies ist um so erstaunlicher, als die Wolle bei dem üblicherweise verwendeten, leicht sauren pH-Wert der wässrigen Flotte selber eine kationisch geladene Oberfläche aufweist, wodurch die kationischen Polyurethane eigentlich abgestoßen werden sollten, was ein schlechteres Aufziehverhalten der Polyurethane zur Folge hätte.

Gegebenenfalls schließt sich an die Behandlung in Schritt b) eine weiterer Nachbehandlungsschritt c) an, bei dem die Wolle mit weiteren Hilfsmitteln und Zusatzstoffe behandelt wird: Als derartige Hilfsmittel und Zusatzstoffe können beispielsweise Verlaufshilfsmittel, Egalisiermittel, Tenside, Entlüfter, Netzmittel, Distanziermittel, Aufziehhilfs- und Fixiermittel zum Einsatz gelangen.

Die im erfindungsgemäßen Verfahren eingesetzten kationischen Polyurethane weisen in wässriger Dispersion eine unvergleichlich bessere Stabilität auf als die aus der DE-A-198 587 34 und DE-A-198 587 36 bekannten selbstdispergierenden Isocyanate. Die entsprechenden Dispersionen besitzen daher weit höhere Standzeiten und können langfristig hergestellt und genutzt werden.

Gegenstand der vorliegenden Erfindung ist ferner die filzfrei ausgerüstete Wolle, dadurch gekennzeichnet, dass die Wolle
a) in einer Vorbehandlung einem Plasma ausgesetzt und
b) mit einer wässrigen Dispersion kationischer Polyurethane behandelt wird.

Für die beiden Schritte a) und b) gilt das zuvor für das Verfahren ausgeführte.

Bei der im erfindungsgemäßen Verfahren eingesetzten Wolle kann es sich um die unterschiedlichsten Wollmaterialien handeln, z.B. Rohwolle nach der Rohwollwäsche, gefärbten oder ungefärbten Wollkammzug, gefärbtes oder ungefärbtes Wollgarn, -vorgarn, -gestricke, -gewirke, -gewebe oder -stoffe. Der Wassergehalt der Wolle beträgt dabei üblicherweise 4 bis 40 Gew.%, bevorzugt 5 bis 30 Gew.%, besonders bevorzugt 6 bis 25 Gew.% und insbesondere 8 bis 15 Gew.%.

Die mit den kationischen Polyurethanen ausgerüstete Wolle der vorliegenden Erfindung unterscheidet sich deutlich von der mit den selbstdispergierenden Isocyanaten ausgerüsteten Wolle. Bei den aus der DE-A-198 587 34 und DE-A-198 587 36 bekannten selbstdispergierenden Isocyanaten handelt es sich um im niedermolekularen Bereich angesiedelte Verbindungen, die z.B. durch Umsetzung von organischen Diisocyanaten wie Diisocyanatobutan mit monofunktionellen Polyalkylenoxidalkoholen, -aminen oder -thiolen hergestellt werden. Diese selbstdispergierenden Isocyanate vernetzen auf der Oberfläche der Wolle in Gegenwart des Wassers. Hierbei reagieren die NCO-Endgruppen der Polyisocyanate mit dem Wasser unter Abspaltung von CO₂ und unter Bildung längerer Ketten durch Ausbildung von Harnstoffgruppierungen als Brückengliedern zwischen jeweils zwei Isocyanat-Molekülen. Die vernetzten längeren Ketten weisen somit relativ viele Harnstoffgruppierungen und nur sehr wenige Urethanbindungen auf. Im Gegensatz dazu besitzen die Polyurethane mit den angegebenen hohen Molekulargewichten in der Hauptkette in sehr großer Menge Urethanbindungen. Aufgrund der höheren Molekulargewichte ist die Endgruppenkonzentration relativ gering und die Endgruppen selber nur schwer zugänglich. Eine Vernetzung von eventuell in geringem Maße vorhandenen NCO-Endgruppen unter dem Wasser-Einfluss ist daher kaum zu erwarten.

### Beispiele:

### I Herstellung der kationischen Polyurethane

### Polyurethan 1: (erfindungsgemäß)

174,5 g Toluylendiisocyanat (Isomerengemisch aus 2,4- und 2,6- Isomer im Verhältnis 20:80;1,003 mol) werden innerhalb von 1,5 Stunden zu einer Lösung von 119,2 g N-Methyldiethanolamin in 250 g Aceton bei Raumtemperatur zugegeben. Dann wird durch Aufnahme eines Infrarotspektrums geprüft, ob noch freie Isocyanatgruppen anwesend sind. Ist dies nicht der Fall, werden 707 g Wasser und 60 g Eisessig im Gemisch zulaufen gelassen. Es bildet sich eine homogene klare Flüssigkeit, aus der das Lösungsmittel abdestilliert wird. Ist der Feststoffgehalt von 29 % erreicht, so stellt man die Destillation ein.

### Polyurethan 2: (erfindungsgemäß)

168,8 g Toluylendiisocyanat (Isomerengemisch aus 2,4- und 2,6- Isomer im Gewichtsverhältnis 20:80; 0,97 mol) werden innerhalb von 1,5 Stunden zu einer Lösung von 119,2 g N-Methyldiethanolamin in 250 g Aceton bei Raumtemperatur zugegeben. Dann wird durch Aufnahme eines Infrarotspektrums geprüft, ob noch freie Isocyanatgruppen anwesend sind. Ist dies nicht der Fall, werden 696 g Wasser und 60 g Eisessig im Gemisch zulaufen gelassen. Es bildet sich eine homogene klare Flüssigkeit, aus der das Lösungsmittel abdestilliert wird. Ist der Feststoffgehalt von 29 % erreicht, so stellt man die Destillation ein.

### Polyurethan 3: (erfindungsgemäß)

168,5 g Hexamethylendiisocyanat (1,003 mol) werden innerhalb von 1,5 Stunden zu einer Lösung von 59,6 g N-Methyldiethanolamin (0,5 mol) und 31,1 g Ethylenglykol in 250 g Aceton bei Rückflusstemperatur zugegeben. Dann wird durch Aufnahme eines Infrarotspektrums geprüft, ob noch freie Isocyanatgruppen anwesend sind. Ist dies nicht der Fall, werden 580 g Wasser und 31,3 g Eisessig im Gemisch zulaufen gelassen. Es bildet sich eine homogene klare Flüssigkeit, aus der das Lösungsmittel abdestilliert wird. Ist der Feststoffgehalt von 30,9 % erreicht, so stellt man die Destillation ein.

### Selbstdispergierendes Isocyanat 4: (Vergleich)

85 Gew.Teile eines Isocyanates mit dem NCO Gehalt von 22,5 %, bestehend im wesentlichen aus trimerem Hexamethylendiisocyanat, werden bei 60°C mit 15 Gew.% Teilen eines Polyethylenglykolmonomethylethers mit einem mittleren Molekulargewicht von 350 umgesetzt. Das entstehende Produkt hat einen NCO-Gehalt von 17 % und eine Viskosität von 1500 mPas bei 25°C. Das Produkt lässt sich durch einfaches Rühren mit einem Glasstab sehr gut in einem Becherglas mit Wasser dispergieren. Die rechnerische NCO-Funktionalität beträgt F= 2,70.

### II Ausrüstung der Wolle und Filzfreiprüfung

### a) Plasmavorbehandlung

Zunächst wird feuchter Wollkammzug einer Coronabehandlung unterworfen, wobei folgende Parameter eingehalten werden:

| | |
|---|---|
| Frequenz | 23,0 Hz |
| Walzenabstand | 0,8 mm |
| Luftzufuhr | 400,0 l/min |
| Puls-Vollwellen ein | 2 |
| " " aus | 8 |
| Spreitung | 1: 2 |
| Vorschub | 10 m/min |
| Leistung | 780 W |

### b) Nasschemische Behandlung

Der gemäß Schritt a) vorbehandelte feuchte Wollkammzug wird nach dem Ausziehverfahren mit einer über einen Essigsäure/Acetat-Puffer auf pH 5 gepufferten Lösung der oben beschriebenen Polyurethane behandelt. Bei Einsatz des selbstdispergierenden Isocyanates wird analog bei einem über einen Phosphatpuffer eingestellten pH-Wert von 7 verfahren.

Dabei wird der Kammzug in warmem Wasser vorgenetzt und durch Abschleudern vom überschüssigen Wasser befreit. Zu dem Ausrüstungsbad aus 40°C warmem Wasser werden 2 % (fest, bezogen auf das Wollgewicht im trockenen Zustand) der jeweiligen Polyurethane zugegeben unter Einhaltung eines Flottenverhältnisses von 1 : 20. Die Wolle verbleibt 20 Minuten im Bad und wird dann herausgenommen, ausgepresst, dreimal manuell mit Wasser gewaschen im Becherglas, jeweils wiederum ausgepresst und zum Trocknen auf eine Leine gehängt.

Nach der Trocknung wird die Wolle dem Aachener Filzkugeltest nach IWTO-Norm 20-69 unterworfen. Die Ergebnisse sind in der nachfolgenden Tabelle 1 zusammengefasst:

**Tabelle 1:**

| **Beispiel** | **Nachbehandlungsmittel** | **Mittelwert des Filzkugeldurchmessers [cm]** |
|---|---|---|
| 1 | Polyurethan 1 | 3,794 |
| 2 | Polyurethan 2 | 3,754 |
| 3 | Polyurethan 3 | 3,494 |
| V4 | selbstdispergierendes Isocyanat 4 | 3,437 |

### Vergleichsversuche V5 und V6:

In V5 wird der Aachener Filzkugeltest an der Wolle nach ausschließlicher Plasmabehandlung, d.h. nach Durchführung des oben für die Beispiele 1-3 und V4 beschriebenen Schritts a) gemessen.

In V6 wird die Wolle ausschließlich gemäß der oben für Beispiel V4 beschriebenen Behandlung gemäß Schritt b) mit dem selbstdispergierenden Isocyanat behandelt und dann dem Aachener Filzkugeltest unterzogen.

Ein Vergleich der ebenfalls im Aachener Filzkugeltest messbaren Filzdichten ist für die unterschiedlichen Vor- und Nachbehandlungen des Wollkammzuges in Tabelle 2 enthalten:

**Tabelle 2:**

| Beispiel | Verfahren zur Antifilzausrüstung | Filzdichte [g/cm³] |
|---|---|---|
| 1 | Wolle, plasmabehandelt + Polyurethan 1 | 0,036 |
| 2 | Wolle, plasmabehandelt + Polyurethan 2 | 0,036 |
| V4 | Wolle, plasmabehandelt + selbstdispergierbares Polyisocyanat 4 | 0,04 |
| V5 | Wolle, plasmabehandelt | 0,11 |
| V6 | Wolle, unbehandelt + selbstdispergierendes Polyisocyanat 4 | 0,14 |

## Patentansprüche

1. Verfahren zur Filzfreiausrüstung von Wolle, **dadurch gekennzeichnet, dass** die Wolle
a) in einer Vorbehandlung einem Plasma ausgesetzt und
b) mit einer wässrigen Dispersion kationischer Polyurethane behandelt wird.

2. Verfahren nach Anspruch 1, **dadurch gekennzeichnet, dass** die Plasmabehandlung der Wolle gemäß Schritt a) entweder in Form einer Niedertemperatur-Plasmabehandlung bei verringertem Druck oder in Form einer Coronabehandlung bei Normaldruck erfolgt.

3. Verfahren nach Anspruch 1 oder 2, **dadurch gekennzeichnet, dass** die kationischen Polyurethane ein Molekulargewicht (Gewichtsmittel) von mindestens 14000, bevorzugt mindestens 16000, besonders bevorzugt mindestens 18000 und insbesondere mindestens 20000 besitzen und die Obergrenze des Molekulargewichtes bei 200.000, vorzugsweise bei 180.000 und besonders bevorzugt bei 150.000 liegt.

4. Verfahren nach einem oder mehreren der Ansprüche 1-3, **dadurch gekennzeichnet, dass** die kationischen Polyurethane erhältlich sind durch Umsetzung von
(i) organischen Polyisocyanaten der allgemeinen Formel (I)
Q[NCO]ₚ, (I)
worin
p eine Zahl von 1,5 bis 5 darstellt und
Q einen organischen Rest darstellt
und
(ii) ein oder mehreren Bis- und/oder Polyhydroxylverbindungen, die mindestens ein tertiäres Stickstoffatom und mindestens zwei Hydroxylverbindungen enthalten,
wobei der kationische Charakter durch anschließende Protonierung oder Alkylierung der tertiären Stickstoffatome erzeugt wird.

5. Verfahren nach einem oder mehreren der Ansprüche 1-4, **dadurch gekennzeichnet, dass** zur Herstellung der kationischen Polyurethane auch noch
(iii) ein oder mehrere Bis- und /oder Polyhydroxylverbindungen, welche keine Stickstoffatome enthalten und Molekulargewichte von 62 bis 5000 besitzen,
eingesetzt werden.

6. Verfahren nach einem oder mehreren der Ansprüche 1-5, **dadurch gekennzeichnet, dass** als Bis- und/oder Polyhydroxylverbindungen (ii) solche der allgemeinen Formel (II) eingesetzt werden,
HO-(CHR¹)ₘ-NR²-(CHR¹)ₙ-OH (II),
worin
n und m unabhängig voneinander eine Zahl von 1 bis 6 darstellen,
R¹ unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁- C₄-Alkylrest sein kann,
R² geradkettiges oder verzweigtes C₁-C₁₀-Alkyl, bevorzugt C₁-C₆-Alkyl, C₁-C₁₀-Cycloalkyl, bevorzugt C₅-C₆-Cycloalkyl, C₆-C₁₂-Aryl, bevorzugt Phenyl oder einen Rest -(CH₂)ᵣ-OH, wobei r eine Zahl von 1 bis 6 darstellt.

7. Verfahren nach einem oder mehreren der Ansprüche 1-6, **dadurch gekennzeichnet, dass** als Bis- und/oder Polyhydroxylverbindungen (ii) der allgemeinen Formel (II) N-Methyldiethanolamin, N-Ethyldiethanolamin, N-Butyldiethanolamin, N-Methyl-dipentanolamin-1,5, N-Ethyldipentanolamin-1,5, Triethanolamin, Umsetzungsprodukte von Fettaminen mit zwei Mol Ethylenoxid oder Propylenoxid oder Alkoxylierungsprodukte der zuvor genannten Verbindungen, bevorzugt von Tris-[2-(2-hydroxyethoxy)-ethyl]-amin eingesetzt werden.

8. Verfahren nach einem oder mehreren der Ansprüche 1-7, **dadurch gekennzeichnet, dass** als Bis- und /oder Polyhydroxylverbindungen (iii) Ethylenglykol, Propandiol-1,2, Propandiol-1,3, Butandiol-1,4, Butandiol-1,3, Butandiol-2,3, Butandiol-1,2, Butendiol-1,4, Butindiol-1,4, Pentandiol-1,5, Neopentylglykol, Hexandiol-2,5, Hexandiol-1,6, 3-Methylpentandiol-1,5, 2,5-Dimethylhexan-2,5-diol, Octadecandiol-1,12, Diethylenglygol, Dipropylenglykol, Triethylenglykol, Tripropylenglykol, Tetraethylenglykol, Tetrapropylenglykol sowie weitere höhere Polyethylen- und Polypropylenglykole, Glycerin, Trimethylolpropan, 2-Hydroxymethyl-2-methyl-1,3-propandiol, 1,2,6-Hexantriol oder Pentaerythrit eingesetzt werden.

9. Verfahren nach einem oder mehreren der Ansprüche 1-8, **dadurch gekennzeichnet, dass** die kationischen Polyurethane erhalten werden durch Umsetzung von
(i) organischen Polyisocyanaten der allgemeinen Formel (I)
Q[NCO]ₚ, (I)
worin
p eine Zahl von 1,5 bis 5, insbesondere 2, darstellt und
Q einen aliphatischen Kohlenwasserstoffrest mit 2 bis 18, insbesondere 6 bis 10 Kohlenstoffatomen, einen cycloaliphatischen Kohlenwasserstoffrest mit 4 bis 15, insbesondere 5 bis 10 Kohlenstoffatomen, einen aromatischen Kohlenwasserstoffrest mit 6 bis 15, vorzugsweise 6 bis 13 Kohlenstoffatomen sowie einen araliphatischen Kohlenwasserstoffrest mit 8 bis 15, vorzugsweise 8 bis 13 Kohlenstoffatomen darstellt
und
(ii) Bis- und/oder Polyhydroxylverbindungen (ii) der allgemeinen Formel (II)
HO-(CHR¹)ₘ-NR²-(CHR¹)ₙ-OH (II),
worin
n und m unabhängig voneinander eine Zahl von 1 bis 6 darstellen und insbesondere gleich sind und eine Zahl von 1 bis 3 darstellen,
R¹ unabhängig voneinander Wasserstoff oder einen geradkettigen oder verzweigten C₁-C₄-Alkylrest darstellen, wobei entlang der Alkylenketten (CHR¹)ₙ und (CHR¹)ₘ von Kohlenstoffatom zu Kohlenstoffatom wechselnd der Rest R¹ sowohl Wasserstoff als auch ein geradkettiger oder verzweigter C₁-C₄-Alkylrest sein kann,
R² geradkettiges oder verzweigtes C₁-C₁₀-Alkyl, insbesondere C₁-C₆-Alkyl, C₁-C₁₀-Cycloalkyl, insbesondere C₅-C₆-Cycloalkyl, C₆-C₁₂-Aryl, insbesondere Phenyl, oder einen Rest -(CH₂)ᵣ-OH, wobei r eine Zahl von 1 bis 6, insbesondere 1 bis 3 darstellt,
und wobei der kationische Charakter der Polyurethane durch Protonierung oder Alkylierung der tertiären Stickstoffatome erzeugt wird.

10. Verfahren nach einem oder mehreren der Ansprüche 1-9, **dadurch gekennzeichnet, dass** kationische Polyurethane eingesetzt werden, die durch Umsetzung von
(i) 2,4-Toluylendiisocyanat oder 2,6-Toluylendiisocyanat oder Gemischen dieser Isomeren mit
(ii) N-Methyl- oder n-Butyldiethanolamin
erhalten werden, wobei der kationische Charakter durch Behandlung dieser Umsetzungsprodukte mit einer der Säuren Salzsäure, Schwefelsäure, Ameisensäure, Essigsäure oder Propionsäure erzeugt wird.

11. Verfahren nach einem oder mehreren der Ansprüche 1-10, **dadurch gekennzeichnet, dass** in Schritt b) die wässrige Dispersion des kationischen Polyurethans bei einem pH-Wert von 2 bis 7 , bevorzugt 3 bis 6, besonders bevorzugt 4 bis 6 und insbesondere 4,5 bis 5,5 auf die Wolle appliziert wird.

12. Verfahren nach einem oder mehreren der Ansprüche 1-11, **dadurch gekennzeichnet, dass** die Konzentration der wässrigen Dispersion des kationischen Polyurethans, bezogen auf den Feststoffgehalt an Polyurethan, in der Ausrüstungsflotte 0,5 bis 75 g/l, bevorzugt 1 bis 50 g/l beträgt.

13. Filzfrei ausgerüstete Wolle, **dadurch gekennzeichnet, dass** die Wolle nach einem oder mehreren der Verfahren gemäß den Ansprüchen 1-12 erhältlich ist.

## Claims

1. Process for antifelt finishing of wool, **characterized in that** the wool
a) is exposed to a plasma in a pretreatment and
b) treated with an aqueous dispersion of cationic polyurethanes.

2. Process according to Claim 1, **characterized in that** the plasma treatment of the wool in step a) is effected either in the form of a low temperature plasma treatment at reduced pressure or in the form of a corona treatment at normal pressure.

3. Process according to Claim 1 or 2, **characterized in that** the cationic polyurethanes have a weight average molecular weight of at least 14 000, preferably at least 16 000, particularly preferably at least 18 000, especially at least 20 000, and the upper limit of the molecular weight is at 200 000, preferably at 180 000, particularly preferably at 150 000.

4. Process according to one or more of Claims 1-3, **characterized in that** the cationic polyurethanes are obtainable by reaction of
(i) organic polyisocyanates of the general formula (I)
Q[NCO]ₚ, (I)
where
p is from 1.5 to 5 and
Q is an organic radical
and
(ii) one or more bis- and/or polyhydroxy compounds containing at least one tertiary nitrogen atom and at least two hydroxyl groups,
wherein the cationic character is generated by subsequent protonation or alkylation of the tertiary nitrogen atoms.

5. Process according to one or more of Claims 1 to 4, **characterized in that** the cationic polyurethanes are prepared by additionally using
(iii) one or more bis- and/or polyhydroxy compounds containing no nitrogen atoms and possessing molecular weights of 62 to 5 000.

6. Process according to one or more of Claims 1-5, **characterized in that** the bis- and/or polyhydroxy compounds (ii) used are those of the general formula (II)
HO-(CHR¹)ₘ-NR²-(CHR¹)ₙ-OH (II),
where
n and m are independently from 1 to 6,
R¹ is in each case independently hydrogen or a straight-chain or branched C₁-C₄-alkyl radical **in that** along the (CHR¹)ₙ and (CHR¹)ₘ alkylene chains R¹ can alternate from carbon atom to carbon atom in being not only hydrogen but also a straight-chain or branched C₁-C₄-alkyl radical,
R² is straight-chain or branched C₁-C₁₀-alkyl, preferably C₁-C₆-alkyl, C₁-C₁₀-cycloalkyl, C₅-C₆-cycloalkyl, C₆-C₁₂-aryl, preferably phenyl or a -(CH₂)ᵣ-OH radical,where R is from 1 to 6.

7. Process according to one or more of Claims 1 to 6, **characterized in that** the bis- and/or polyhydroxy compounds (ii) of the general formula (II) are selected from N-methyldiethanolamine, N-ethyldiethanolamine, N-butyldiethanolamine, N-methyldipentanolamine-1,5, N-ethyldipentanolamine-1,5, triethanolamine, reaction products of fatty amines with two moles of ethylene oxide or propylene oxide or alkoxylation products of the aforementioned compounds, preferably of tris[2-(2-hydroxyethoxy)ethyl]amine.

8. Process according to one or more of Claims 1 to 7, **characterized in that** the bis- and/or polyhydroxy compounds (iii) used are ethylene glycol, propanediol-1,2, propanediol-1,3, butanediol-1,4, butanediol-1,3, butanediol-2,3, butanediol-1,2, butenediol-1,4, butynediol-1,4, pentanediol-1,5, neopentyl glycol, hexanediol-2,5, hexanediol-1,6, 3-methylpentanediol-1,5, 2,5-dimethylhexane-2,5-diol, octadecanediol-1,12, diethylene glycol, dipropylene glycol, triethylene glycol, tripropylene glycol, tetraethylene glycol, tetrapropylene glycol and also further higher polyethylene and polypropylene glycols, glycerol, trimethylolpropane, 2-hydroxymethyl-2-methyl-1,3-propanediol, 1,2,6-hexanetriol or pentaerythritol.

9. Process according to one or more of Claims 1 to 8, **characterized in that** the cationic polyurethanes are obtained by reaction of
(i) organic polyisocyanates of the general formula (I)
Q[NCO]ₚ, (I)
where
p is from 1.5 to 5, especially 2, and
Q is an aliphatic hydrocarbon radical having 2 to 18, especially 6 to 10, carbon atoms, a cycloaliphatic hydrocarbon radical having 4 to 15, especially 5 to 10, carbon atoms, an aromatic hydrocarbon radical having 6 to 15, preferably 6 to 13, carbon atoms or an araliphatic hydrocarbon radical having 8 to 15, preferably 8 to 13, carbon atoms,
and
(ii) bis- and/or polyhydroxy compounds (ii) of the general formula (II)
HO-(CHR¹)ₘ-NR²-(CHR¹)ₙ-OH (II),
where
n and m are independently from 1 to 6 and are especially identical and from 1 to 3,
R¹ is in each case independently hydrogen or a straight-chain or branched C₁-C₄-alkyl radical **in that** along the (CHR¹)ₙ and (CHR¹)ₘ alkylene chains R¹ can alternate from carbon atom to carbon atom in being not only hydrogen but also a straight-chain or branched C₁-C₄-alkyl radical,
R² is straight-chain or branched C₁-C₁₀-alkyl, especially C₁-C₆-alkyl, C₁-C₁₀-cycloalkyl, especially C₅-C₆-cycloalkyl, C₆-C₁₂-aryl, especially phenyl, or a -(CH₂)ᵣ-OH radical, where r is from 1 to 6, especially from 1 to 3,
and the cationic character of the polyurethanes is generated by protonation or alkylation of the tertiary nitrogen atoms.

10. Process according to one or more of Claims 1-9, **characterized in that** cationic polyurethanes are used that are obtained by reaction of
(i) 2,4-toluylene diisocyanate or 2,6-toluylene diisocyanate or mixtures of these isomers with
(ii) N-methyl- or N-butyldiethanolamine,
wherein the cationic character is generated by treating the reaction products with one of the acids hydrochloric acid, sulphuric acid, formic acid, acetic acid or propionic acid.

11. Process according to one or more of Claims 1-10, **characterized in that** step b) is effected by applying the aqueous dispersion of the cationic polyurethane to the wool at a pH of 2 to 7, preferably 3 to 6, particularly preferably 4 to 6 and especially 4.5 to 5.5.

12. Process according to one or more of Claims 1-11, **characterized in that** the concentration of the aqueous dispersion of the cationic polyurethane, based on the solids content of polyurethane, in the finishing liquor is 0.5 to 75 g/l, preferably 1 to 50 g/l.

13. Nonfelting wool, **characterized in that** the wool is obtainable according to one or more of the processes of Claims 1-12.

## Revendications

1. Procédé de finition anti-feutrage de la laine, **caractérisé en ce que**
a) on expose la laine dans un prétraitement à un plasma et
b) on traite la laine avec une dispersion aqueuse de polyuréthanes cationiques.

2. Procédé selon la revendication 1, **caractérisé en ce que** le traitement de la laine par plasma selon l'étape a) du procédé de l'invention est effectué sous forme d'un traitement par plasma à basse température à pression réduite ou sous forme d'un traitement corona à pression normale.

3. Procédé selon la revendication 1 ou 2, **caractérisé en ce que** les polyuréthanes cationiques ont une masse moléculaire (moyenne en poids) d'au moins 14 000, de préférence au moins 16 000, en particulier de préférence au moins 18 000 et en particulier au moins 20 000 et la limite supérieure de la masse moléculaire est de 200 000, de préférence 180 000, en particulier de préférence 150 000.

4. Procédé selon l'une ou plusieurs des revendications 1 à 3, **caractérisé en ce que** les polyuréthanes cationiques peuvent être obtenus par réaction
(i) des polyisocyanates organiques de formule générale (I)
Q[NCO]ₚ (I),
dans laquelle
p représente un nombre entre 1,5 et 5 et ,
Q est un radical organique et
(ii) un ou plusieurs composés bis - et/ou polyhydroxylés contenant au moins un atome d'azote tertiaire et au moins deux groupes hydroxyle,
le caractère cationique du polyuréthane étant généré par protonation ou alkylation postérieure des atomes d'azote tertiaires.

5. Procédé selon l'une ou plusieurs des revendications 1 à 4, **caractérisé en ce qu'**on utilise également pour la préparation des polyuréthanes cationiques
(iii) un ou plusieurs autres composés bis - et/ou polyhydroxylés, qui ne contiennent pas d'atome d'azote et qui présentent une masse moléculaire de 62 à 5000.

6. Procédé selon l'une ou plusieurs des revendications 1 à 5, **caractérisé en ce qu'**on utilise comme composés bis - et/ou polyhydroxylés (ii) ceux de formule générale (II)
HO-(CHR¹)ₘ-NR²-(CHR¹)ₙ-OH (II),
dans laquelle
n et m indépendamment l'un de l'autre représentent un nombre de 1 à 6,
R¹ indépendamment l'un de l'autre représente l'hydrogène ou un radical alkyle en C₁-C₄ à chaîne linéaire ou ramifié, dans lequel avec les chaînes alkylène (CHR¹)ₙ et (CHR¹)ₘ, R¹ peut alternativement d'atome de carbone à atome de carbone être l'hydrogène mais également un radical alkyle en C₁-C₄ à chaîne linéaire ou ramifié, et
R² est un radical alkyle en C₁-C₁₀, de préférence alkyle en C₁-C₆, à chaîne linéaire ou ramifié, cycloalkyle en C₁-C₁₀, de préférence cycloalkyle en C₅-C₆, aryle en C₆-C₁₂, de préférence phényle, ou un radical -(CH₂)ᵣ-OH, où r représente un nombre de 1 à 6.

7. Procédé selon l'une ou plusieurs des revendications 1 à 6, **caractérisé en ce qu'**on utilise comme composés bis- et/ou polyhydroxylés (ii) de formule générale (II) la N-méthyldiéthanolamine, la N-éthyldiéthanolamine, la N-butyl-diéthanolamine, la N-méthyl-1,5-dipentanolamine, la N-éthyl-1,5-dipentanolamine, la triéthanolamine, des produits de réaction d'amines grasses avec deux moles d'oxyde d'éthylène ou d'oxyde de propylène, ou des produits alcoxylation des composés cités précédemment comme par exemple la tris-[2-(2-hydroxyéthoxy)-éthyl]-amine.

8. Procédé selon l'une ou plusieurs des revendications 1 à 7, **caractérisé en ce qu'**on utilise comme composés bis - et/ou polyhydroxylés (iii) : l'éthylèneglycol, le 1,2-propanediol, le 1,3-propanediol, le 1,4-butanediol, le 1,3-butanediol, le 2,3-butanediol, le 1,2-butanediol, le 1,4-butènediol, le 1,4-butinediol, le 1,5-pentanediol, le néopentylglycol, le 2,5-hexanediol, le 1,6-hexanedioil, le 3-méthyl-1,5-pentanediol, le 2,5-diméthylhexane-2,5-diol, le 1,12-octadécanediol, le diéthylèneglycol, le dipropylèneglycol, le triéthylèneglycol, le tripropylèneglycol, le tétraéthylèneglycol, le tétrapropylèneglycol ainsi que d'autres polyéthylèneglycols et polypropylèneglycols supérieurs, la glycérine, le triméthylolpropane, le 2-hydroxyméthyl-2-méthyl-1,3-propanediol, le 1,2,6-hexanetriol et le pentaérythritol.

9. Procédé selon l'une ou plusieurs des revendications 1 à 8, **caractérisé en ce qu'**on obtient les polyuréthanes cationiques par réaction
(i) des polyisocyanates organiques de formule générale (I)
Q[NCO]ₚ (I),
dans laquelle
p représente un nombre entre 1,5 et 5, en particulier 2, et
Q est un radical hydrocarboné aliphatique ayant 2 à 18, en particulier 6 à 10, atomes de carbone, un radical hydrocarboné cycloaliphatique ayant 4 à 15, en particulier 5 à 10, atomes de carbone, un radical hydrocarboné aromatique ayant 6 à 15, de préférence 5 à 13, atomes de carbone, ou un radical hydrocarboné araliphatique ayant 8 à 15, de préférence 8 à 13, atomes de carbone et
(ii) des composés bis- et/ou polyhydroxylés (ii) de formule générale (II)
HO-(CHR¹)ₘ-NR²-(CHR¹)ₙ-OH (II),
dans laquelle
n et m indépendamment l'un de l'autre représentent un nombre de 1 à 6 et en particulier sont identiques et représentent un nombre de 1 à 3,
R¹ indépendamment l'un de l'autre représente l'hydrogène ou un radical alkyle en C₁-C₄ à chaîne linéaire ou ramifié, dans lequel avec les chaînes alkylène (CHR¹)ₙ et (CHR¹)ₘ, R¹ peut alternativement d'atome de carbone à atome de carbone être l'hydrogène mais également un radical alkyle en C₁-C₄ à chaîne linéaire ou ramifié, et
R² est un radical alkyle en C₁-C₁₀, en particulier alkyle en C₁-C₆, à chaîne linéaire ou ramifié, cycloalkyle en C₁-C₁₀, en particulier cycloalkyle en C₅-C₆, aryle en C₆-C₁₂, en particulier phényle, ou un radical -(CH₂)ᵣ-OH, où r représente un nombre de 1 à 6, en particulier 1 à 3
et où le caractère cationique des polyuréthanes est généré par protonation ou alkylation postérieure des atomes d'azote tertiaires.

10. Procédé selon l'une ou plusieurs des revendications 1 à 9, **caractérisé en ce qu'**on obtient les polyuréthanes cationiques par réaction
(i) de 2,4-toluènediisocyanate ou de 2,6-toluènediisocyanate ou des mélanges de ces isomères avec
(ii) la N-méthyldiéthanolamine ou la N-butyldiéthanolamine,
où le caractère cationique est obtenu par traitement de ces produits réactionnels avec un des acides tels que l'acide chlorhydrique, l'acide sulfurique, l'acide formique, l'acide acétique, ou l'acide propionique.

11. Procédé selon l'une ou plusieurs des revendications 1 à 10, **caractérisé en ce que** dans l'étape b) la dispersion aqueuse des polyuréthanes cationiques est appliquée sur la laine à une valeur de pH de 2 à 7, de préférence 3 à 6, en particulier de préférence 4 à 6, et particulièrement 4,5 à 5,5.

12. Procédé selon l'une ou plusieurs des revendications 1 à 11, **caractérisé en ce que** la concentration de la dispersion aqueuse du polyuréthane cationique, rapporté à la quantité de solides du polyuréthane, est dans la liqueur d'anti-feutrage de 0,5 à 75 g/l, de préférence 1 à 50 g/l.

13. Procédé selon l'une ou plusieurs des revendications 1 à 12, **caractérisé en ce que** la laine peut être obtenue selon l'un ou plusieurs des procédés selon les revendications 1 à 12.
